**Europäisches Patentamt**

**European Patent Office**

**Office européen des brevets**

(19)

(11) Veröffentlichungsnummer: **0 217 244**
**B1**

## EUROPÄISCHE PATENTSCHRIFT

(12)

(45) Veröffentlichungstag der Patentschrift:
23.11.88

(51) Int. Cl.⁴: **B 60 R 22/26**

(21) Anmeldenummer: **86112948.4**

(22) Anmeldetag: **19.09.86**

(54) Verfahren zum Montieren einer Sitzbank sowie Montagehilfe zu seiner Durchführung.

(30) Priorität: **27.09.85 DE 3534432**

(43) Veröffentlichungstag der Anmeldung:
**08.04.87 Patentblatt 87/15**

(45) Bekanntmachung des Hinweises auf die Patenterteilung:
**23.11.88 Patentblatt 88/47**

(84) Benannte Vertragsstaaten:
**FR GB IT SE**

(56) Entgegenhaltungen:
**DE-A-2 931 552**

(73) Patentinhaber: **Adam Opel Aktiengesellschaft,
Bahnhofsplatz 1 Postfach 1560, D-6090
Rüsselsheim (DE)**

(72) Erfinder: **Schrom, Ralf H., Dipl.- Ing. (FH),
Dolomitenstrasse 1, D-6090 Rüsselsheim (DE)**
Erfinder: **Trutter, Walter Paul, Irenenstrasse 21,
D-6200 Wiesbaden (DE)**

(74) Vertreter: **Elbert, Karl, Dipl.- Ing., Adam Opel AG
Patentabteilung Bahnhofsplatz 1 Postfach 1560,
D-6090 Rüsselsheim (DE)**

**Beschreibung**

Die Erfindung bezieht sich auf ein Verfahren zum Montieren einer mit Schlitzen zum Durchführen von Gurtschlössern versehenen Sitzbank eines Hintersitzes eines Kraftfahrzeuges. Weiterhin betrifft die Erfindung eine Montagehilfe zur Durchführung dieses Verfahrens.

Aus Sicherheitsgründen ist man bei heutigen Kraftfahrzeugen bestrebt, auch bei den Anschnallgurten des Hintersitzes einen steilen Gurtwinkel zu erzielen. Hierzu müssen die Gurtschlösser vor der Hinterkante der Sitzbank aus Schlitzen in der Sitzfläche der Sitzbank heraustreten. Das notwendige Durchfädeln der Gurtschlösser wird bislang von Hand ohne Hilfsmittel ausgeführt und ist eine sehr mühsame und zeitaufwendige Tätigkeit, insbesondere, wenn die Gurtschlösser an halbstarren Drahtseilpeitschen befestigt sind, die bei Druck auf die Gurtschlösser ausweichen.

Der Erfindung liegt die Aufgabe zugrunde, ein Verfahren der eingangs genannten Art derart zu verbessern, daß die Montage der Sitzbank nicht durch zeitaufwendige Durchfädelarbeiten im Zusammenhang mit den Gurtschlössern erschwert und verzögert wird. Weiterhin soll eine Montagehilfe zur Durchführung dieses Verfahrens geschaffen werden.

Die erstgenannte Aufgabe wird erfindungsgemäß dadurch gelöst, daß als Einfädelhilfe auf den Gurtschlössern eine zur Sitzbank hin sich keilförmig verjüngende Montagehilfe aufgesetzt wird.

Durch diese Verfahrensweise wird die Montage der Sitzbank wesentlich erleichtert und kann deshalb rascher erfolgen als bisher. Die Gurtschlösser brauchen nicht mehr durch die entsprechenden Schlitze geführt zu werden, vielmehr rutschen sie aufgrund der keilförmigen Montagehilfen beim Herunterbewegen der Sitzbank von selbst durch diese Schlitze.

Bei üblichen, für fünf Personen zugelassenen Kraftfahrzeugen ragen aus der Sitzbank normalerweise ein einzelnes Gurtschloß für eine an einer Seite sitzende Person und unmittelbar nebeneinander zwei weitere Gurtschlösser für eine andere, an einer Seite sitzende und für eine in Fahrzeugmitte sitzende Person. Das Durchfädeln der beiden unmittelbar benachbarten Gurtschlösser durch einen gemeinsamen Schlitz bereitete bislang besonders viel Mühe. Diese kann erheblich reduziert werden, wenn gemäß einer vorteilhaften Weiterbildung des Verfahrens für zwei unmittelbar nebeneinander angeordnete Gurtschlösser eine gemeinsame Montagehilfe verwendet wird, welche mit jeweils einer Zunge in jedes der Gurtschlösser einzusetzen ist.

Die zweitgenannte Aufgabe, nämlich die Schaffung einer Montagehilfe zur Durchführung des vorgenannten Verfahrens, wird erfindungsgemäß dadurch gelöst, daß die Montagehilfe aus einem sich zur Sitzbank hin verjüngenden Keil besteht, welcher an seinem dickeren Ende eine einer üblichen Gurtzunge entsprechende Zunge zum Verrasten in einem Gurtschloß hat.

Solche Montagehilfen können einfach vor Montage der Sitzbank in die jeweiligen Gurtschlösser gesteckt werden. Sie verrasten dort auf gleiche Weise wie die Gurtzungen und können nach Montage der Sitzbank nach Niederdrücken der Entriegelungstasten der Gurtschlösser entfernt werden. Dank dieser erfindungsgemäßen Montagehilfen rutschen die Gurtschlösser von selbst durch die Schlitze in der Sitzbank, wenn man diese bei Montage zum Fahrzeugunterbau hin bewegt.

Die Schlitze in der Sitzbank verlaufen üblicherweise in Fahrzeugquerrichtung, während die Gurtschlösser eine in Fahrzeuglängsrichtung ausgerichtete Haupterstreckungsebene haben. Das Durchfädeln mit der erfindungsgemäßen Montagehilfe erfolgt auch bei solchen in Querrichtung verlaufenden Schlitzen sehr einfach, wenn gemäß einer vorteilhaften Ausgestaltung der Erfindung die Scheitellinie der Montagehilfe quer zur Haupterstreckungsebene der Zunge verläuft.

Zwei nebeneinander angeordnete Gurtschlösser können leicht gleichzeitig durch einen Schlitz in der Sitzbank geführt werden, wenn die Montagehilfe parallel zueinander zwei Zungen zur Verrastung in zwei nebeneinander vorgesehenen Gurtschlössern hat. Statt einer solchen Montagehilfe für zwei Gurtschlösser könnte man natürlich auch zwei einzelne Montagehilfen für jeweils ein Gurtschloß verwenden, was jedoch aufwendiger wäre.

Wenn die Montagehilfe für zwei Gurtschlösser ausgebildet ist, dann entsteht das Problem, daß nach dem Einsetzen in die Gurtschlösser die Entriegelungstasten der Gurtschlösser nicht mehr oder nur noch schwer zu erreichen sind. Dem kann auf einfache Weise begegnet werden, wenn gemäß einer anderen, vorteilhaften Ausgestaltung der Erfindung die Montagehilfe als Hohlkörper ausgebildet ist und zumindest ein Loch zum Durchgreifen mit einem Finger aufweist.

Besonders gut zu erreichen sind die Entriegelungstasten, wenn das Loch in einer der beiden Keilflächen der Montagehilfe vorgesehen ist.

Die Montagehilfe kann in beiden möglichen Stellungen in zwei Gurtschlösser eingesetzt werden, wenn in beiden Keilflächen ein Loch vorgesehen ist.

Die Erfindung läßt zahlreiche Ausführungsformen zu. Zur weiteren Verdeutlichung ihres Grundprinzips ist eine davon in der Zeichnung dargestellt und wird nachfolgend beschrieben. Die Zeichnung zeigt in

Fig. 1    einen Blick in einen Fahrzeuginnenraum mit einem Hintersitz, für dessen Montage das erfindungsgemäße Verfahren und die erfindungsgemäße Montagehilfe Anwendung finden kann,
Fig. 2 eine perspektivische Darstellung von
zwei nebeneinander liegenden
Gurtschlössern mit der
erfindungsgemäßen Montagehilfe.

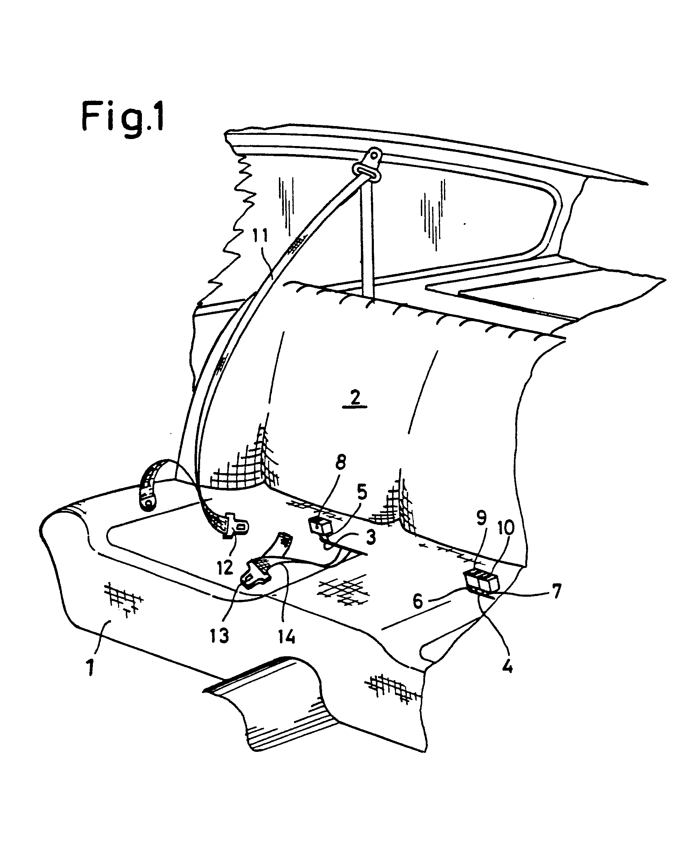

Die Figur 1 zeigt im Inneren eines
Personenkraftwagens den rechten Bereich eines
Hintersitzes, der aus einer Sitzbank 1 und einer
Hintersitz-Rückenlehne 2 besteht. In der Sitzbank
1 sind zwei Schlitze 3, 4 zu erkennen, aus denen
Gurtpeitschen 5, 6, 7 mit Gurtschlössern 8, 9, 10
ragen. Auf der rechten Fahrzeugseite ist ein als
Automatikgurt ausgebildeter Anschnallgurt 11
dargestellt, der eine Gurtzunge 12 hat, die in das
Gurtschloß 8 einsteckbar ist. Ein entsprechender,
nicht gezeigter Anschnallgurt auf der linken
Fahrzeugseite vermag mit seiner Gurtzunge mit
dem Gurtschloß 10 verrastet zu werden. Das
unmittelbar neben dem Gurtschloß 10 liegende
Gurtschloß 9 dient zur Aufnahme einer Gurtzunge
13 eines Beckengurtes 14, mit dem sich eine auf
der Mitte der Sitzbank 1 sitzende Person
angurten kann.

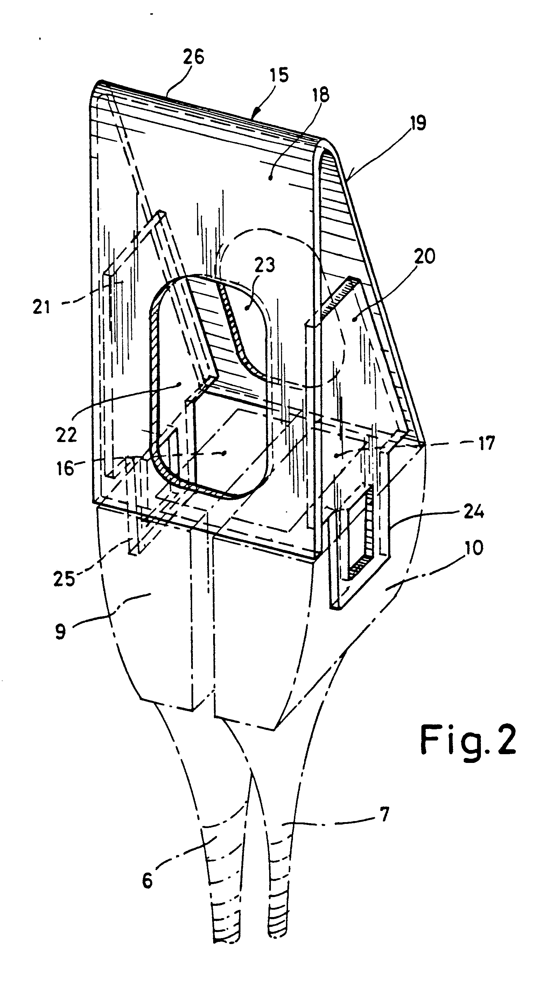

Bei der Montage einer solchen Sitzbank 1
bedient man sich zum Durchfädeln der
Gurtschlösser 9, 10 durch den Schlitz 4
erfindungsgemäß einer in Figur 2 dargestellten
Montagehilfe 15, welche nachfolgend anhand der
Figur 2 näher beschrieben wird.

Die Figur 2 zeigt strichpunktiert die zwei
Gurtpeitschen 6, 7 mit den Gurtschlössern 9, 10.
Jedes Gurtschloß 9, 10 hat eine
Entriegelungstaste 16, 17, durch die ein
angelegter Anschnallgurt gelöst werden kann.
Die erfindungsgemäße Montagehilfe 15 ist für
beide Gurtschlösser 9, 10 gleichzeitig
vorgesehen. Sie hat die Form eines sich zu den
Gurtschlössern 9, 10 hin erweiternden, als
Hohlkörper ausgebildeten Keiles, der aus zwei
Keilflächen 18, 19 und zwei keilförmigen
Seitenflächen 20, 21 besteht. In den Keilflächen
18, 19 ist jeweils ein längliches Loch 22, 23
vorgesehen, durch welches man mit einem Finger
greifen kann, um die Entriegelungstasten 16, 17
betätigen zu können. Beide Seitenflächen 20, 21
besitzen eine in der Zeichnung gesehen nach
unten gerichtete Zunge 24, 25, welche jeweils wie
eine Gurtzunge 12, 13 ausgebildet ist und
dadurch entsprechend in den Gurtschlössern 9,
10 verrasten kann, so daß die Montagehilfe 15 auf
diese Weise auf den Gurtschlössern gehalten
wird.

Wichtig ist noch, daß die Montagehilfe 15 eine
Scheitellinie 26 hat, die quer zu den
Gurtschlössern 6, 7 und dadurch parallel zum
Schlitz 4 verläuft, damit das Durchfädeln
besonders leicht erfolgen kann.

Das alleinstehende Gurtschloß 8 kann meist
ohne eine besondere Montagehilfe durch die
Sitzbank 1 geführt werden. Man könnte natürlich
auch für dieses eine der Montagehilfe 15
entsprechende, nur für ein Gurtschloß
vorgesehene Montagehilfe vorsehen. Ebenso
kann man für die beiden Gurtschlösser 9, 10 statt einer gemeinsamen Montagehilfe 15 zwei
einzelne Montagehilfen verwenden.

Bei der Montage der Sitzbank 1 setzt man die
Montagehilfe 15 in die Gurtschlösser 9, 10 und
bewegt dann die Sitzbank 1 auf den
Fahrzeugunterbau. Durch die keilförmige
Ausbildung der Montagehilfe 15 gelangen die
Gurtschlösser 9, 10 von selbst durch den Schlitz
4. Erforderlichenfalls kann nach der Montage der
Sitzbank an der Montagehilfe 15 leicht gezogen
werden, um die Gurtschlösser 9, 10 vollständig
aus dem Schlitz 4 zu ziehen, was durch die
Löcher 22, 23 in der Montagehilfe bequem
möglich ist. Anschließend greift man mit einem
Finger durch eines der Löcher 22, 23 und betätigt
die Entriegelungstasten 16, 17, so daß die
Montagehilfe 15 aus den Gurtschlössern 9, 10
herausgezogen werden kann und der
Montagevorgang dadurch abgeschlossen ist.

**Patentansprüche**

1. Verfahren zum Montieren einer mit Schlitzen
zum Durchführen von Gurtschlössern versehenen
Sitzbank eines Hintersitzes eines
Kraftfahrzeuges, dadurch gekennzeichnet, daß
als Einfädelhilfe auf den Gurtschlössern eine zur
Sitzbank hin sich keilförmig verjüngende
Montagehilfe aufgesetzt wird.

2. Verfahren nach Anspruch 1, dadurch
gekennzeichnet, daß für zwei unmittelbar
nebeneinander angeordnete Gurtschlösser eine
gemeinsame Montagehilfe verwendet wird,
welche mit jeweils einer Zunge in jedes der
Gurtschlösser einzusetzen ist.

3. Montagehilfe (15) zur Durchführung des
Verfahrens nach den vorangegangenen
Ansprüchen, welche zur Erleichterung des
Durchfädelns von Gurtschlössern (8, 9, 10) durch
Schlitze (3, 4) einer Sitzbank (1) eines Hintersitzes
eines Kraftfahrzeugs dient, dadurch
gekennzeichnet, daß diese aus einem sich zur
Sitzbank (1) hin verjüngenden Keil besteht,
welcher an seinem dickeren Ende eine einer
üblichen Gurtzunge (12, 13) entsprechende Zunge
(24, 25) zum Verrasten in einem Gurtschloß (9, 10)
hat.

4. Montagehilfe nach Anspruch 3, dadurch
gekennzeichnet, daß die Scheitellinie (26) quer
zur Haupterstreckungsebene der Zunge (24, 25)
verläuft.

5. Montagehilfe nach den Ansprüchen 3 oder 4,
dadurch gekennzeichnet, daß sie parallel
zueinander zwei Zungen (24, 25) zur Verrastung in
zwei nebeneinander vorgesehenen
Gurtschlössern (9, 10) hat.

6. Montagehilfe nach einem oder mehreren der
vorangehenden Ansprüche, dadurch
gekennzeichnet, daß sie als Hohlkörper
ausgebildet ist und zumindest ein Loch (22, 23)
zum Durchgreifen mit einem Finger aufweist.

7. Montagehilfe nach einem oder mehreren der
vorangehenden Ansprüche, dadurch gekennzeichnet, daß das Loch (22, 23) in einer der beiden Keilflächen (18, 19) der Montagehilfe (15) vorgesehen ist.

8. Montagehilfe nach einem oder mehreren der vorangehenden Ansprüche, dadurch gekennzeichnet, daß in beiden Keilflächen (18, 19) ein Loch (22, 23) vorgesehen ist.

**Claims**

1. Method for the assembly of a rear bench seat of a motor vehicle, which is provided with slots for the passage of belt locks, characterised in that an assembly aid which tapers in a wedge shape towards the bench seat is applied to the belt locks as a feedthrough aid.

2. Method according to claim 1, characterised in that for two belt locks disposed immediately adjacent to each other there is used a common assembly aid which is to be inserted by one tongue in each of the belt locks.

3. Assembly aid (15) for carrying out the method according to the preceding claims, which serves to facilitate the feeding of belt locks (8, 9, 10) through slots (3, 4) in a rear bench seat (1) of a motor vehicle, characterised in that it consists of a wedge which tapers towards the bench seat (1) and which has at its thicker end a tongue (24, 25) corresponding to an ordinary belt tongue (12, 13) for latching in a belt lock (9, 10).

4. Assembly aid according to claim 3, characterised in that the crest line (26) extends perpendicularly to the main plane of the tongue (24, 25).

5. Assembly aid according to claim 3 or 4, characterised in that it has two tongues (24, 25) parallel to each other for latching in two adjacent belt locks (9, 10).

6. Assembly aid according to one or more of the preceding claims, characterised in that it is constructed as a hollow body and comprises at least one hole (22, 23) for passage of a finger.

7. Assembly aid according to one or more of the preceding claims, characterised in that the hole (22, 23) is provided in one of the two wedge surfaces (18, 19) of the assembly aid (15).

8. Assembly aid according to one or more of the preceding claims, characterised in that a hole (22, 23) is provided in both wedge surfaces (18, 19).

**Revendications**

1. Procédé de montage d'une banquette, munie de fentes pour le passage des verrous des ceintures de sécurité, d'un siège arrière d'un véhicule automobile, caractérisé par le fait que, pour faciliter l'enfilage, on installe sur les verrous un auxiliaire de montage allant en se rétrécissant en forme de coin du côté de la banquette du siège.

2. Procédé selon la revendication 1, caractérisé par le fait que, pour deux verrous de ceinture placés à proximité immédiate l'un de l'autre, on utilise un auxiliaire de montage commun que l'on engage respectivement par une boucle dans chacun des verrous de ceinture.

3. Auxiliaire de montage (15) pour la mise en oeuvre du procédé selon les revendications précédentes, cet auxiliaire de montage servant à faciliter l'enfilage des verrous (8, 9, 10) des ceintures à travers les fentes (3, 4) d'une banquette (1) d'un siège arrière d'un véhicule automobile, caractérisé par le fait qu'il est constitué par un coin qui va en se rétrécissant du côté de la banquette (1) du siège et qui comporte, à son extrémité la plus épaisse, une boucle (24, 25) correspondant à une boucle normale (12, 13) de ceinture et servant à l'encliquetage dans un verrou de ceinture (9, 10).

4. Auxiliaire de montage selon la revendication 3, caractérisé par le fait que la ligne de crête (26) est disposée transversalement au plan d'orientation général de la boucle (24, 25).

5. Auxiliaire de montage selon la revendication 3 ou 4, caractérisé par le fait qu'il comporte deux boucles (24, 25) mutuellement parallèles pour l'encliquetage dans deux verrous de ceinture (9, 10) prévus l'un à côté de l'autre.

6. Auxiliaire de montage selon l'une ou plusieurs des revendications précédentes, caractérisé par le fait qu'il est réalisé sous la forme d'un corps creux et comporte au moins un trou (22, 23) pour le passage d'un doigt.

7. Auxiliaire de montage selon l'une ou plusieurs des revendications précédentes, caractérisé par le fait que le trou (22, 23) est prévu dans l'une des deux surfaces frontales (18, 19) de l'auxiliaire de montage (15).

8. Auxiliaire de montage selon l'une ou plusieurs des revendications précédentes, caractérisé par le fait qu'un trou (22, 23) est prévu dans les deux surfaces frontales (18, 19).

# Fig.1

Fig.2